# EUROPEAN PATENT SPECIFICATION

(11) **EP 4 177 136 B1**
(45) Date of publication and mention of the grant of the patent: **31.12.2025**
(21) Application number: 22204015.6
(22) Date of filing: 27.10.2022
(51) Int. Cl.: B62D 13/00, B60D 1/62, B60R 21/0134, B62D 13/06, G01S 13/76, G01S 13/86, G07C 5/08

(54) **SYSTEM INCLUDING A TOWING VEHICLE AND A TRAILER**
SYSTEM MIT EINEM ZUGFAHRZEUG UND EINEM ANHÄNGER
SYSTÈME COMPRENANT UN VÉHICULE TRACTEUR ET UNE REMORQUE

(30) Priority: 04.11.2021 IT 202100028124
(43) Date of publication of application: 10.05.2023
(73) Proprietor: Toyota Material Handling Manufacturing Italy S.p.A, 40132 Bologna (IT)
(72) Inventor: Mastroianni, Francesco, 40132 Bologna (IT)
(74) Representative: Hoffmann Eitle

(56) References cited:
- EP-A1- 2 045 155
- WO-A1-2019/083511
- WO-A1-2021/014303
- US-A1- 2015 066 296
- US-A1- 2018 284 781

## Description

### TECHNICAL FIELD OF THE INVENTION

The field of the present invention relates to a system including a towing vehicle and a trailer (or semitrailer) and, in particular, to a system for identifying the position of the trailer with respect to the towing vehicle.

### BACKGROUND OF THE INVENTION

It is known to equip autonomous or semi-autonomous towing vehicles and the corresponding semi-trailers with one or more optical systems (such as camera, lasers or the like) for detecting obstacles. Nevertheless, the system including the towing vehicle and the semi-trailer has blind spots that cannot be properly managed with such optical detection systems; in fact, due to objects that may eventually be interposed between the camera and the obstacle to be detected, the detection may not reliably function under any conditions. Accordingly, only a low degree of safety can be achieved.

Furthermore, semi-trailers are in general cheap systems on which it is not convenient to install expensive and sophisticated sensors for monitoring and controlling the dynamic behavior of the semi-trailer.

Accordingly, it is generally difficult to monitor the dynamic behavior of the trailer or semitrailer in a cost-effective manner. Furthermore, it is difficult to achieve satisfactory anti-collision systems that may avoid collisions between the trailer and an obstacle.

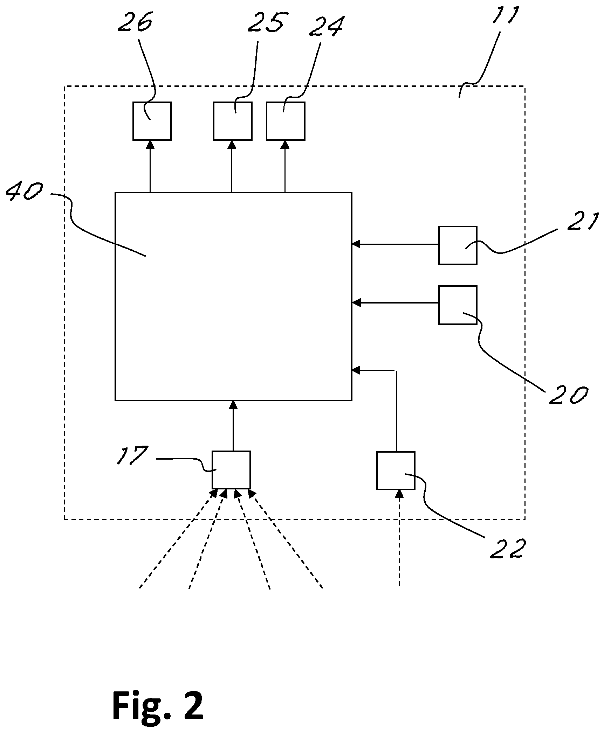

WO 2019/083511 A1 relates to vehicle and infrastructure communications systems that share real-time articulating vehicle and trailer position and relative orientation information. Position sensor(s) 285 also includes one or more transceivers and antennas AT, which are configured to communicate with wireless motion trackers 290 that are mounted or positioned on and/or proximate to corners or vertices CPs of trailer TR, as may be understood with reference to Figures 2, 3, 4, 5, and 6. In combination with absolute location information from GPS 170, the controller(s) then enable precise location of the vehicle 100 and trailer TR combination as well as the relative, articulated orientation of the trailer TR relative to hitch point HP and vehicle 100. WO 2019/083511 discloses in particular a system including a towing vehicle and a trailer connected to the towing vehicle in an articulated manner, the system comprising:
a plurality of radio frequency trailer emitters mounted on corners of the trailer, wherein each trailer emitter is configured to emit a trailer signal including an identifier associated to a mounting position of the respective trailer emitter on the trailer, a receiver mounted on the towing vehicle configured to receive the trailer signals emitted by the plurality of radio frequency trailer emitters,
a control unit mounted on the towing vehicle configured to analyse the trailer signals received at the receiver by determining a distance of each of the trailer emitters with respect to the receiver as a function of the signal reception power of the trailer signals.

US 2018/284781 A1 relates to a vehicle, and more particularly relates to a system and method for communicating between a vehicle and a trailer. The vehicle 110 includes at least one radio frequency (RF) system 160. Each RF system 160 including at least one ultra-wideband (UWB) transceiver 162. Likewise, the trailer 120 includes at least one RF system 170, the RF system 170 including at least one UWB transceiver 172. One or more mobile RF sensors 170 may be temporarily attached to the trailer 120 to determine the respective dimensions of the trailer 120. By utilizing one or more mobile RF sensors 170, which are temporarily attached or held near a respective corner of the trailer 120, the processor 130 can determine the dimensions of any trailer without having to permanently install the RF systems thereon.

### SUMMARY OF THE INVENTION

In view of the above, it is an object of the present invention to provide a system including a towing vehicle and a trailer (or semi-trailer) that can monitor in a cost-effective manner the position of the trailer with respect to the towing vehicle. A further object is to provide a system including a towing vehicle and a trailer that can enhance safety of operation. More specifically, an object of the invention is to reduce the risk of collisions between the semi-trailer and an obstacle in a cost-effective manner. A further object of the invention is to provide a system that can properly monitor the dynamic behavior of the semi-trailer in order to prevent hazardous maneuvers or dangerous situations.

In view of the above objects, the present invention proposes a system as defined by claim 1. According to an aspect, a system includes a towing vehicle and a trailer connected to the towing vehicle in an articulated manner, the system comprising:
a plurality of radio frequency trailer emitters mounted on corners of the trailer, wherein each trailer emitter is configured to emit a trailer signal including an identifier associated to a mounting position of the respective trailer emitter on the trailer,
a receiver mounted on the towing vehicle configured to receive the trailer signals emitted by the plurality of radio frequency trailer emitters,
a control unit mounted on the towing vehicle configured to analyse the trailer signals received at the receiver and, based on the result of the analysis of the trailer signals, to determine the position of the trailer with respect to the towing vehicle.

Thanks to the radio frequency emitter mounted on corners of the trailer, it is possible to determine in a cost-effective manner the position of the trailer. In fact, there is no need of expensive installations of sensors and controllers on the trailer, while only RF emitters should be mounted on predetermined positions of the trailer. Further, the position of the corners of the trailer may be reliably determined even if the corners may not be visible from the perspective of the towing vehicle due to the interposition of external objects. Hence, a reliable system for monitoring the position of the trailer can be achieved.

Preferably, the plurality of the trailer emitters includes four trailer emitters mounted on the four corners of the trailer, each of the identifiers identifies one of a rear left corner, a rear right corner, a front left corner and a front right corner, depending on the position of the trailer emitter that emits the trailer signal including the identifier. This allows to reliably determine the position of the trailer on the basis for four signals representing the positions of the four corners of the trailer. According to an alternative, only two trailer emitters might be mounted on the rear corners of the trailer in order to further reduce costs, while still providing valuable information for determining the position of the trailer with respect to the towing vehicle.

Preferably, the control unit of the towing vehicle is configured to calculate, based on the analysis of the trailer signals, the position of the trailer corners, the trajectory of the trailer corners and the speed of the trailer corners. This allows to collect useful information relating to the behaviour of the trailer that may be used for enhancing stability, performance and safety of operation.

Preferably, the control unit is configured to calculate an amount of sliding of the trailer based on the analysis of the trailer signals. Hence, safety of operation can be further enhanced and hazardous manoeuvres can be possibly avoided.

Preferably, the receiver is further configured to receive one or more obstacle signals emitted by one or more radio frequency obstacle emitters mounted on one or more obstacles; the control unit is further configured to jointly analyse the trailer signals and the obstacle signals and, based on the result of the analysis of the trailer and obstacle signals, to assess a risk of collision between the trailer and the one or more obstacles. This allows to achieve an anti-collision system that takes into account the trailer's position in a cost-effective manner, without requiring expensive installations on the trailer itself. Furthermore, by using RF transceivers, the assessment of risk collision is performed in a reliable manner even in presence of blind spots.

Preferably, the control unit is further configured to use the calculated position, trajectory and speed of the trailer corners to assess the risk of collision with the one or more obstacles. Preferably, the control unit is configured to emit an alarm in case the risk of collision is above a certain threshold. Hence, safety of operation is further enhanced.

Preferably, the control unit is configured to assess the risk of collision also based on a towing vehicle speed and/or a towing vehicle steering angle detected by a speed sensor and a steering angle sensor of the towing vehicle. This allows to perform a more accurate and reliable assessment of the collision risk by employing both sensed data relating to the towing vehicle and sensed data relating to the trailer to estimate the future trajectory of the trailer.

Preferably, the towing vehicle emitters and/or the obstacle emitters are ultra-wideband, UWB, emitters. This allows to reliably determine the position of the trailer corner and safely perform anti-collision functions.

Preferably, the towing vehicle further includes acquiring means configured to read a tag mounted on the trailer when the trailer is connected to the towing vehicle, so as to acquire an indication of the dimension of the trailer, wherein the control unit is configured to calculate a dimension of the trailer based on an analysis of the trailer signals, wherein the control unit is configured to detect an error in case the difference between the indication of the dimension acquired from reading the tag and the dimension calculated based on the analysis of the trailer signals is above a predetermined threshold. Hence, reliability and correct functioning of the control system may be periodically verified in an automatic manner by the towing vehicle.

According to an embodiment, the present disclosure provides a system including a towing vehicle and a trailer connected to the towing vehicle in an articulated manner, the system comprising:
a plurality of radio frequency trailer emitters mounted on corners of the trailer,
wherein each trailer emitter is configured to emit a trailer signal including an identifier associated to a mounting position of the respective trailer emitter on the trailer,
a receiver mounted on the towing vehicle configured to receive the trailer signals emitted by the plurality of radio frequency trailer emitters,
a control unit mounted on the towing vehicle configured to analyse the trailer signals received at the receiver by determining a distance of each of the trailer emitters with respect to the receiver and an orientation of each of the trailer emitters with respect to the receiver as a function of the signal reception power and directivity of the trailer signals,
wherein the control unit is configured, based on the result of the analysis of the trailer signals, to determine the position of the trailer with respect to the towing vehicle, the position of the trailer corners, the trajectory of the trailer corners and the speed of the trailer corners,
wherein the control unit is further configured to calculate an amount of sliding of the trailer based on the analysis of the trailer signals,
wherein the receiver is further configured to receive one or more obstacle signals emitted by one or more radio frequency obstacle emitters mounted on one or more obstacles;
wherein the control unit is further configured to jointly analyse the trailer signals and the obstacle signals and, based on the result of the analysis of the trailer and obstacle signals, to assess a risk of collision between the trailer and the one or more obstacles by using the calculated position, trajectory and speed of the trailer corners.

### BRIEF DESCRIPTION OF THE DRAWINGS

The above and other advantages of the present invention will be illustrated with reference to example embodiments of the invention, described with reference to the appended drawings listed as follows.
Fig. 1 shows a schematic view of a towing vehicle, a trailer and an obstacle when seen from above, according to the invention;
Fig. 2 shows a functional scheme of a control unit of the towing vehicle and of the associated devices;
Fig. 3 shows a schematic view of a possible implementation of a control unit of the towing vehicle.

### DETAILED DESCRIPTION OF THE PREFERRED EMBODIMENTS

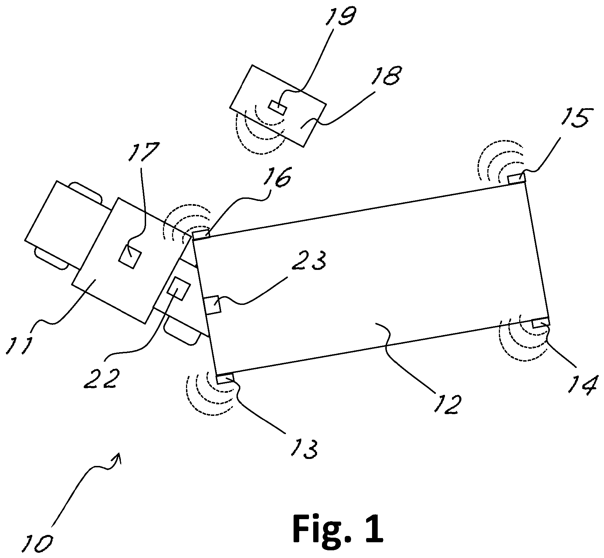

Figure 1 shows a schematic view of a system 10 including a towing vehicle 11 and a trailer (or semi-trailer) 12 connected to the towing vehicle 10 in an articulated manner. Specifically, the trailer 12 can rotate around a vertical pivot for forming an articulated system, as per se known in the art. The towing vehicle 11 may be a truck or a towing tractor, either for use on streets or in industrial sites. The towing vehicle 11 may be a four-wheeled vehicle, as shown in the figure. The trailer 12 may have a substantially rectangular shape when viewed from above. The system 10 may be autonomous (i.e. driverless) or semi-autonomous; alternatively, the towing vehicle may be a traditional vehicle configured to be driven by a human operator.

The system 10 comprises a plurality of radio frequency, RF, trailer emitters 13-16 mounted on corners of the trailer 12. In the embodiment shown in figure 1, the plurality of the trailer emitters includes four trailer emitters mounted on the four corners of the trailer 12. However, also different arrangements may be conceived. For example, only two emitters may be mounted on the rear corners of the trailer 12 in order to reduce costs.

Each trailer emitter 13-16 is configured to emit a trailer signal including an identifier associated to a mounting position of the respective trailer emitter on the trailer 12. Preferably, when four emitters 13-16 are provided as in the preferred embodiment, each of the identifiers in the trailer signals identifies one of a rear left corner, a rear right corner, a front left corner and a front right corner, corresponding to the position of the trailer emitter that emits the trailer signal including the identifier.

The system further includes a receiver 17 mounted on the towing vehicle 11 configured to receive the trailer signals emitted by the plurality of radio frequency trailer emitters 13-16. In a preferred embodiment, the towing vehicle emitters 13-16 are ultra-wideband, UWB, emitters and the receiver 17 on the towing vehicle 11 is an UWB receiver configured to receive the signals emitted by the emitters 13-16. Alternatively, also other kinds of radio frequency transceiver may be employed, e.g. Bluetooth or the like. The receiver 17 of the towing vehicle is, according to the invention, configured to determine the direction of provenience and the power of the signal emitted by the trailer emitters 13-16. The receiver 17 and/or a control unit 40 of the towing vehicle are configured to determine the position of the emitter 13-16 with respect to the towing vehicle 11; specifically, the receiver 17 and/or a control unit 40 of the towing vehicle is configured to determine a distance of the trailer emitter 13-16 with respect to the receiver 17 and an orientation of the of the trailer emitter 13-16 with respect to the receiver 17, as a function of the signal reception power and directivity. Furthermore, since each trailer signal includes an identifier associated to a mounting position of the respective trailer emitter on the trailer, the towing vehicle 11 is configured to determine the position of a determined portion of the trailer (e.g. the corners).

The system 10 includes a control unit 40 (shown in figure 2) mounted on the towing vehicle 11 that is configured to analyse the trailer signals received at the receiver 17 and, based on the result of the analysis of the trailer signals, to determine the position of the trailer 12 with respect to the towing vehicle 11. This permits to determine reliably the position of the trailer in a cost-effective manner by mounting a limited number of radio frequency emitters on the trailer 12 that can communicate with a receiver 17 on the towing vehicle.

Preferably, the control unit 40 is configured to calculate, based on the analysis of the trailer signals, the instantaneous position of the trailer corners, the instantaneous trajectory of the trailer corners and the instantaneous speed of the trailer corners. The above elaboration (or calculation) can be performed periodically in order to assess the dynamic behaviour of the trailer over time. This allows to collect useful information relating to the behaviour of the trailer that may be used for enhancing stability, performance and safety of operation. According to the invention, the control unit 40 is configured to calculate an amount of sliding of the trailer 12 based on the analysis of the trailer signals. Hence, safety of operation can be further enhanced. The control unit 40 may output information regarding the amount of sliding to an output user interface 26 (shown in figure 2); alternatively, an actuator (such a braking system, or the like) may be activated by the control unit 40 in reaction to a detected sliding of the trailer in order to avoid an hazardous situation.

Preferably, the receiver 17 of the towing vehicle 11 is further configured to receive one or more obstacle signals emitted by one or more radio frequency obstacle emitters 19 mounted on one or more obstacles 18. In figure 1, only one obstacle 18 is shown, although the receiver 17 may receive a larger number of signals from different radio frequency obstacle emitters. The control unit 40 is further configured to jointly analyse the trailer signals and the obstacle signals and, based on the result of the analysis of the trailer and obstacle signals, to assess a risk of collision between the trailer 12 and the one or more obstacles 18. This allows to achieve an anti-collision system that takes into account the trailer's position in a cost-effective manner, without requiring expensive installations on the trailer itself. Furthermore, the anti-collision system is not dependent on an optical system and may properly function also in case of blind spots or the like.

The control unit 40 may advantageously use the calculated position, trajectory and speed of the trailer corners to assess the risk of collision with the one or more obstacles. Preferably, the control unit 40 is configured to emit an alarm in case the risk of collision is above a certain threshold, e.g. by emitting an alarm signal to a speaker and/or display 26 of the towing vehicle 11 to alert a user thereof. Hence, safety is further enhanced.

In addition, the control unit 40 might perform an active control in case of risk of collision by actuating respective actuators 24, 25, e.g. for reducing the speed of the towing vehicle, opposing a steering action by the user, or the like.

In a preferred embodiment, the control unit 40 is configured to assess the risk of collision also based on a towing vehicle speed and/or a towing vehicle steering angle detected by a speed sensor 20 and a steering angle sensor 21 of the towing vehicle. This allows to perform a more accurate and reliable assessment of the collision risk; specifically, a more accurate estimation of the future trailer trajectory can be performed.

Preferably, also the obstacle emitters 19 may be implemented as UWB emitters. This allows to reliably determine the position of the obstacle and safely perform anti-collision functions.

In a preferred embodiment, the towing vehicle 11 further includes acquiring means 22 configured to read, e.g. in an initialization phase, a tag 23 mounted on the trailer 12 when the trailer is connected to the towing vehicle, so as to acquire an indication of the dimension of the trailer 12. The tag 23 may be implemented e.g. as a RFID or NFC transmitter, whereas the acquiring means 22 of the towing vehicle 11 may be realized with a corresponding reader. In this embodiment, the control unit 40 is further configured to calculate a dimension of the trailer 12 based on an analysis of the trailer signals emitted by the emitters 13-16, e.g. in the initialization phase when the trailer 12 is connected to the towing vehicle 11 in a predetermined mutual position (e.g. with the trailer 12 positioned aligned with a longitudinal axis of the towing vehicle 11). The control unit 40 is configured to detect an error in case the difference between the indication of the dimension acquired from reading the tag 23 and the dimension calculated based on the analysis of the trailer signals emitted by the emitters 13-16 is above a predetermined threshold. Hence, reliability and correct functioning of the control system may be periodically verified in an automatic manner.

Figure 2 shows a schematic view of the towing vehicle 11, including the control unit 40, which is communicably connected to the receiver 17 and the tag reader 22. The receiver 17 collects the trailer signals from the trailer emitters 13-16, while the tag reader 22 reads the tag 23 of the trailer. The control unit 40 is configured to elaborate the collected signals to perform different task. Specifically, the control unit 40 may elaborate the trailer signals to determine the position of the trailer 12, to emit control signals to actuators 24, 25 in order to ensure safe operation of the system, or to give an alert to the user (if present) via the output interface 26 (a speaker and/or a display). The control unit 40 may further perform the respective control tasks also on the basis of the signal received from sensors on board of the towing vehicle itself, not only based on the signals collected by the receiver 17, e.g. from a speed sensor 20 or a steering angle sensor 21 of the towing vehicle providing an indication of the speed of the towing vehicle 11 and the steering angle of the towing vehicle 11.

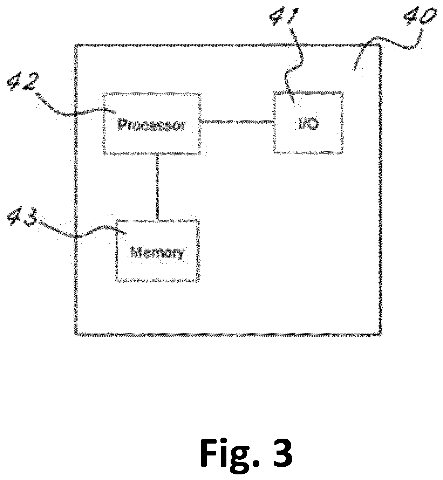

Fig. 3 shows a possible implementation of the control unit 40 of the towing vehicle 11. In an embodiment, the control unit 40 includes a processor 42, a memory 43 and a I/O interface 41. The processor 42 is configured to execute a control software stored on the memory 43 to execute any of the functions of the control unit 40 as above described. When executing the control software, the processor 42 receives as input the information from the sensors of the towing vehicle and/or information received by the receiver 17 by means of the I/O interface 41 and output control signals to the actuators 24, 25 of the towing vehicle using the I/O interface 41 as well. The I/O interface 41 is also communicably connected to the tag reader 22 of the towing vehicle 11 to collect information from the tag 23 of the trailer 12. The I/O interface 41 is also communicably connected to user interface, UI, 26 of the towing vehicle 11 to receive inputs from the user and to output alerts or other information relating to the current status of the towing vehicle. Also other possible implementations of the control unit can be conceived, e.g. including a plurality of distributed processors or the like.

The above description of embodiments applying the innovative principles of the invention is provided solely for the purpose of illustrating said principles and must thus not be considered as limiting the scope of the invention claimed herein.

## Claims

1. A system (10) including a towing vehicle (11) and a trailer (12) connected to the towing vehicle in an articulated manner, the system comprising:
a plurality of radio frequency trailer emitters (13-16) mounted on corners of the trailer,
wherein each trailer emitter is configured to emit a trailer signal including an identifier associated to a mounting position of the respective trailer emitter on the trailer (12),
a receiver (17) mounted on the towing vehicle (11) configured to receive the trailer signals emitted by the plurality of radio frequency trailer emitters (13-16),
a control unit (40) mounted on the towing vehicle (11) configured to analyse the trailer signals received at the receiver (17) by determining a distance of each of the trailer emitters (13-16) with respect to the receiver (17) and an orientation of each of the trailer emitters (13-16) with respect to the receiver (17) as a function of the signal reception power and directivity of the trailer signals,
wherein the control unit (40) is configured, based on the result of the analysis of the trailer signals, to determine the position of the trailer (12) with respect to the towing vehicle (11),
wherein the control unit (40) is further configured to calculate an amount of sliding of the trailer (12) based on the analysis of the trailer signals.

2. The system (10) of claim 1, wherein the control unit (40) is configured to calculate, based on the analysis of the trailer signals, the position of the trailer corners, the trajectory of the trailer corners and the speed of the trailer corners.

3. The system (10) of claim 2, wherein the receiver (17) is further configured to receive one or more obstacle signals emitted by one or more radio frequency obstacle emitters (19) mounted on one or more obstacles (18); wherein the control unit (40) is further configured to jointly analyse the trailer signals and the obstacle signals and, based on the result of the analysis of the trailer and obstacle signals, to assess a risk of collision between the trailer (12) and the one or more obstacles (18) by using the calculated position, trajectory and speed of the trailer corners.

4. The system (10) of one or more of the preceding claims, wherein the plurality of the trailer emitters (13-16) includes four trailer emitters mounted on the four corners of the trailer (12), each of said identifiers identifying one of a rear left corner, a rear right corner, a front left corner and a front right corner, depending on the position of the trailer emitter (13-16) that emits the trailer signal including the identifier.

5. The system (10) of claims 3 and 4, wherein the control unit (40) is configured to emit an alarm in case the risk of collision is above a certain threshold.

6. The system (10) of claims 3 to 5, wherein the control unit (40) is configured to assess the risk of collision also based on a towing vehicle speed and/or a towing vehicle steering angle detected by a speed sensor (20) and a steering angle sensor (21) of the towing vehicle (11).

7. The system (10) of any of the preceding claims, wherein the towing vehicle emitters (13-16) and/or the obstacle emitters (19) are ultra-wideband, UWB, emitters.

8. The system (10) of one or more of the preceding claims, wherein the towing vehicle (11) further includes acquiring means (22) configured to read a tag (23) mounted on the trailer (12) when the trailer is connected to the towing vehicle (11) in a predetermined mutual position with respect to the towing vehicle (11), so as to acquire an indication of the dimension of the trailer (12),
wherein the control unit (40) is configured to calculate a dimension of the trailer based on an analysis of trailer signals received when the trailer (12) is in the predetermined mutual position with respect to the towing vehicle,
wherein the control unit (40) is configured to detect an error in case the difference between the indication of the dimension acquired by reading the tag (23) and the dimension calculated based on the analysis of the trailer signals is above a predetermined threshold.

## Patentansprüche

1. Ein System (10) mit einem Zugfahrzeug (11) und einem Anhänger (12), der gelenkig mit dem Zugfahrzeug verbunden ist, wobei das System umfasst:
mehrere Hochfrequenz-Anhänger-Sender (13-16), die an den Ecken des Anhängers angebracht sind,
wobei jeder Anhänger-Sender so konfiguriert ist, dass er ein Anhänger-Signal aussendet, das eine Kennung enthält, die mit einer Befestigungsposition des jeweiligen AnhängerSenders am Anhänger (12) verbunden ist,
einen Empfänger (17) , der am Zugfahrzeug (11) angebracht ist und so konfiguriert ist, dass er die von der Vielzahl von Hochfrequenz-Anhängersendern (13-16) ausgesendeten Anhängersignale empfängt,
eine Steuereinheit (40), die am Zugfahrzeug (11) angebracht ist und so konfiguriert ist, dass sie die am Empfänger (17) empfangenen Anhängersignale analysiert, indem sie einen Abstand jedes der Anhängersender (13-16) in Bezug auf den Empfänger (17) und die Ausrichtung jedes der Anhängersender (13-16) in Bezug auf den Empfänger (17) als Funktion der Signalempfangsleistung und der Richtwirkung der Anhängersignale zu bestimmen,
wobei die Steuereinheit (40) so konfiguriert ist, dass sie auf der Grundlage des Ergebnisses der Analyse der Anhängersignale die Position des Anhängers (12) in Bezug auf das Zugfahrzeug (11) bestimmt,
wobei die Steuereinheit (40) ferner so konfiguriert ist, dass sie auf der Grundlage der Analyse der Anhängersignale ein Maß für das Gleiten des Anhängers (12) berechnet.

2. System (10) nach Anspruch 1, wobei die Steuereinheit (40) so konfiguriert ist, dass sie auf der Grundlage der Analyse der Anhängersignale die Position der Anhängerecken, die Bewegungsbahn der Anhängerecken und die Geschwindigkeit der Anhängerecken berechnet.

3. System (10) nach Anspruch 2, wobei der Empfänger (17) ferner so konfiguriert ist, dass er ein oder mehrere Hindernissignale empfängt, die von einem oder mehreren Hochfrequenz-Hindernissendern (19) ausgesendet werden, die an einem oder mehreren Hindernissen (18) angebracht sind; wobei die Steuereinheit (40) ferner so konfiguriert ist, dass sie die Anhängersignale und die Hindernissignale gemeinsam analysiert und auf der Grundlage des Ergebnisses der Analyse der Anhänger- und Hindernissignale ein Kollisionsrisiko zwischen dem Anhänger (12) und dem einen oder den mehreren Hindernissen (18) unter Verwendung der berechneten Position, Bahn und Geschwindigkeit der Anhängerecken bewertet.

4. System (10) aus einem oder mehreren der vorstehenden Ansprüche, wobei die Vielzahl von Anhängersendern (13-16) vier Anhängersender umfasst, die an den vier Ecken des Anhängers (12) angebracht sind, wobei jeder der Identifikatoren je nach Position des Anhängersenders (13-16), der das Anhängersignal einschließlich des Identifikators aussendet, eine der folgenden Ecken identifiziert: hintere linke Ecke, hintere rechte Ecke, vordere linke Ecke und vordere rechte Ecke.

5. System (10) aus Anspruch 3 und 4, wobei die Steuereinheit (40) so konfiguriert ist, dass sie einen Alarm ausgibt, wenn das Kollisionsrisiko über einem bestimmten Schwellenwert liegt.

6. System (10) aus Anspruch 3 bis 5, wobei die Steuereinheit (40) so konfiguriert ist, dass sie das Kollisionsrisiko auch auf der Grundlage einer Geschwindigkeit des Zugfahrzeugs und/oder eines Lenkwinkels des Zugfahrzeugs bewertet, die von einem Geschwindigkeitssensor (20) und einem Lenkwinkelsensor (21) des Zugfahrzeugs (11) erfasst werden.

7. System (10) nach einem der vorstehenden Ansprüche, wobei die Sender (13-16) des Zugfahrzeugs und/oder die Sender (19) für Hindernisse Ultrabreitband-Sender (UWB) sind.

8. System (10) nach einem oder mehreren der vorstehenden Ansprüche, wobei das Zugfahrzeug (11) ferner eine Erfassungsvorrichtung (22) umfasst, die so konfiguriert ist, dass sie ein an dem Anhänger (12) angebrachtes Kennzeichen (23) liest, wenn der Anhänger in einer vorbestimmten gegenseitigen Position in Bezug auf das Zugfahrzeug (11) mit dem Zugfahrzeug (11) verbunden ist, um eine Angabe über die Abmessungen des Anhängers (12) zu erfassen,
wobei die Steuereinheit (40) so konfiguriert ist, dass sie die Abmessungen des Anhängers auf der Grundlage einer Analyse der Anhängersignale berechnet, die empfangen werden, wenn sich der Anhänger (12) sich in der vorbestimmten gegenseitigen Position in Bezug auf das Zugfahrzeug befindet,
wobei die Steuereinheit (40) so konfiguriert ist, dass sie einen Fehler erkennt, falls die Differenz zwischen der durch Lesen des Tags (23) erfassten Angabe der Abmessung und der auf der Grundlage der Analyse der Anhängersignale berechneten Abmessung über einem vorbestimmten Schwellenwert liegt.

## Revendications

1. Système (10) comprenant un véhicule de remorquage (11) et une remorque (12) reliée au véhicule de remorquage de manière articulée, le système comprenant :
une pluralité d'émetteurs de radiofréquence de remorque (13-16) montés sur des coins de la remorque,
dans lequel chaque émetteur de remorque est configuré pour émettre un signal de remorque comprenant un identifiant associé à une position de montage de l'émetteur de remorque respectif sur la remorque (12),
un récepteur (17) monté sur le véhicule de remorquage (11) configuré pour recevoir les signaux de remorque émis par la pluralité d'émetteurs de radiofréquence de remorque (13-16),
une unité de commande (40) montée sur le véhicule de remorquage (11) configurée pour analyser les signaux de remorque reçus au niveau du récepteur (17) en déterminant une distance de chacun des émetteurs de remorque (13-16) par rapport au récepteur (17) et une orientation de chacun des émetteurs de remorque (13-16) par rapport au récepteur (17) en fonction de la puissance de réception de signal et de la directivité des signaux de remorque,
dans lequel l'unité de commande (40) est configurée, sur la base du résultat de l'analyse des signaux de remorque, pour déterminer la position de la remorque (12) par rapport au véhicule de remorquage (11),
dans lequel l'unité de commande (40) est en outre configurée pour calculer une quantité de glissement de la remorque (12) sur la base de l'analyse des signaux de remorque.

2. Le système (10) selon la revendication 1, dans lequel
l'unité de commande (40) est configurée pour calculer, sur la base de l'analyse des signaux de remorque, la position des coins de remorque, la trajectoire des coins de remorque et la vitesse des coins de remorque.

3. Le système (10) selon la revendication 2, dans lequel
le récepteur (17) est en outre configuré pour recevoir un ou plusieurs signaux d'obstacle émis par un ou plusieurs émetteurs d'obstacle de radiofréquence (19) montés sur un ou plusieurs obstacles (18) ;
dans lequel l'unité de commande (40) est en outre configurée pour analyser conjointement les signaux de remorque et les signaux d'obstacle et, sur la base du résultat de l'analyse des signaux de remorque et d'obstacle, pour évaluer un risque de collision entre la remorque (12) et le ou les obstacles (18) en utilisant la position, la trajectoire et la vitesse calculées des coins de remorque.

4. Le système (10) de l'une ou plusieurs des revendications précédentes,
dans lequel la pluralité d'émetteurs de remorque (13-16) comprend quatre émetteurs de remorque montés sur les quatre coins de la remorque (12), chacun desdits identifiants identifiant un parmi un coin arrière gauche, un coin arrière droit, un coin avant gauche et un coin avant droit, en fonction de la position de l'émetteur de remorque (13-16) qui émet le signal de remorque comprenant l'identifiant.

5. Le système (10) des revendications 3 et 4, dans lequel
l'unité de commande (40) est configurée pour émettre une alarme dans un cas où le risque de collision est supérieur à un certain seuil.

6. Le système (10) selon les revendications 3 à 5,
dans lequel l'unité de commande (40) est configurée pour évaluer le risque de collision également sur la base d'une vitesse de véhicule de remorquage et/ou d'un angle de braquage de véhicule de remorquage détectés par un capteur de vitesse (20) et un capteur d'angle de braquage (21) du véhicule de remorquage (11).

7. Le système (10) de l'une quelconque des revendications précédentes,
dans lequel les émetteurs de véhicule de remorquage (13-16) et/ou les émetteurs d'obstacles (19) sont des émetteurs à bande ultra large, UWB.

8. Le système (10) de l'une ou plusieurs des revendications précédentes,
dans lequel le véhicule de remorquage (11) comprend en outre un moyen d'acquisition (22) configuré pour lire une balise (23) montée sur la remorque (12) lorsque la remorque est connectée au véhicule de remorquage (11) dans une position mutuelle prédéterminée par rapport au véhicule de remorquage (11), afin d'acquérir une indication de la dimension de la remorque (12),
dans lequel l'unité de commande (40) est configurée pour calculer une dimension de la remorque sur la base d'une analyse des signaux de remorque reçus lorsque la remorque (12) se trouve dans la position mutuelle prédéterminée par rapport au véhicule de remorquage,
dans lequel l'unité de commande (40) est configurée pour détecter une erreur dans un cas où la différence entre l'indication de la dimension acquise par la lecture de la balise (23) et la dimension calculée sur la base de l'analyse des signaux de remorque est supérieure à un seuil prédéterminé.
